# EUROPÄISCHE PATENTSCHRIFT

(11) **EP 1 153 693 B1**
(45) Veröffentlichungstag und Bekanntmachung des Hinweises auf die Patenterteilung: **17.03.2004**
(21) Anmeldenummer: 01890131.4
(22) Anmeldetag: 08.05.2001
(51) Int. Cl.: B23K 11/02, B29C 65/20, E06B 3/673, E06B 3/96, B23K 33/00

(54) **Verfahren zum Verbinden von Hohlprofilleisten durch Schweissen**
Assembly method by welding of hollow section members
Procédé d'assemblage par soudage de profilès creux

(30) Priorität: 09.05.2000 AT 8082000
(43) Veröffentlichungstag der Anmeldung: 14.11.2001
(73) Patentinhaber: Lisec Maschinenbau GmbH, 3353 Seitenstetten (AT)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 264 052
- EP-A- 0 920 978
- DE-A- 2 923 453
- DE-A- 2 923 935
- DE-A- 3 039 733
- FR-A- 2 493 757
- GB-A- 1 163 644
- US-A- 4 574 553
- US-A- 4 704 512
- PATENT ABSTRACTS OF JAPAN vol. 015, no. 422 (M-1173), 25. Oktober 1991 (1991-10-25) -& JP 03 176548 A (NIPPON METAL IND CO LTD), 31. Juli 1991 (1991-07-31)

## Beschreibung

Die Erfindung betrifft ein Verfahren zum Verbinden von Hohlprofilleisten durch Verschweißen derselben mit den Merkmalen des einleitenden Teils von Anspruch 1.

Beispielsweise beim Herstellen von Abstandhalterrahmen für Isolierglas werden Hohlprofilleisten, die aus Aluminium oder aus einem thermoplastischen Kunststoff bestehen, miteinander zu längeren Einheiten durch Verschweißen verbunden.

Beim Herstellen von Abstandhalterrahmen für Isolierglas, die aus Hohlprofilleisten aus Metall, insbesondere Aluminium, bestehen, ist es auch bekannt, den Rahmen statt durch einen in die Enden der Hohlprofilleisten eingesteckten Geradverbinder durch Stumpfverschweißen der Enden einer zum Rahmen gebogenen Hohlprofilleiste zu schließen.

Nachteilig bei dem bekannten Verfahren zum Verbinden von Hohlprofilleisten durch Stumpfschweißen der einander zugekehrten Stirnflächen der Hohlprofilleistenabschnitte ist es, daß an der Stoßstelle eine über die Aussenkontur der Hohlprofilleiste vorstehende Schweißraupe entsteht. Diese Schweißraupe ist insbesondere an der Innenfläche einer zu einem Abstandhalterrahmen verformten Hohlprofilleiste störend, da sie den optischen Eindruck der mit einem solchen Abstandhalter ausgestatteten Isolierglasscheibe beeinträchtigt.

Aus der US 1 004 795 A ist es beim Verbinden von Stäben mit Endscheiben oder Mutterköpfen durch Verschweißen bekannt, in der Stirnfläche des Stabes eine Nut vorzusehen, so daß nach dem Schweißvorgang an der Außenseite keine Schweißraupen sichtbar sind, da das beim Schweißvorgang verdrängte Metall in der Nut aufgenommen werden kann.

Aus der US 4 912 295 A ist es für das Stumpfverschweißen von Stahlblech bekannt, Verformungen der Stahlbleche im Randbereich dadurch zu vermeiden, daß die Stahlbleche im Bereich der quer zur herzustellenden Schweißnaht angeordneten Ränder verjüngte Abschnitte ausgebildet werden.

Ein Verfahren der eingangs genannten Gattung ist aus der DE 30 733 A bekannt.

Der Erfindung liegt die Aufgabe zu Grunde, das aus der DE 30 39 733 A bekannte Verfahren auf das Verbinden von Hohlprofilleisten, die als Abstandhalter für Isolierglas dienen, anzupassen.

Gelöst wird diese Aufgabe erfindungsgemäß mit einem Verfahren, das die Merkmale des Anspruch 1 aufweist.

Bevorzugte und vorteilhafte Ausgestaltungen des erfindungsgemäßen Verfahrens sind Gegenstand der Unteransprüche.

Bei dem erfindungsgemäßen Verfahren werden vor dem Schweißvorgang an den miteinander zu verbindenden Enden der Hohlprofilleisten (oder den Enden einer zu einem rahmenförmigen Abstandhalter verformten Hohlprofilleiste) gegenüber den Stirnflächen zurückversetzte Kanten erzeugt. Daher entsteht beim Verbinden von Hohlprofilleisten oder der Enden einer Hohlprofilleiste miteinander an den Seiten, an welchen die zurückversetzten Kanten vorgesehen waren, keine von außen sichtbare Schweißraupe 4 mehr.

Gegenüber der Stirnfläche der Hohlprofilleiste zurückversetzte Kanten werden bei der Erfindung auch in den Seitenflächen der Hohlprofilleisten vorgesehen und erstrecken sich beispielsweise über die gesamte Höhe der Seitenflächen. Dadurch werden Schweißraupen nicht nur an der in einem Abstandhalterrahmen innen liegenden Seite, sondern auch im Bereich der Seitenflächen derselben vermieden. Dies ist von Vorteil, da Schweißraupen, die das Auftragen von Kleb- oder Dichtungsmasse auf die Seitenflächen der Abstandhalterrahmen stören können, bei der Erfindung vermieden sind.

Vorteilhaft bei dem erfindungsgemäßen Verfahren ist es auch, daß eine auf der mit der zurückversetzten Kante versehene Seite der Hohlprofilleiste allenfalls vorgesehene Beschichtung (Lackierung oder bei Aluminium-Hohlprofilleisten eine durch Eloxieren hergestellte Beschichtung) auch im Bereich der Schweißstelle unbeschädigt bleibt.

Die zurückversetzten Kanten in Außenflächen der Hohlprofilleiste können auf verschiedene Art und Weise erzeugt werden. Beispielsweise können diese dadurch erzeugt werden, daß eine Stufe oder eine Hohlkehle erzeugt wird.

Weitere Einzelheiten, Merkmale und Vorteile der Erfindung ergeben sich aus der nachstehenden Beschreibung eines Ausführungsbeispieles des erfindungsgemäßen Verfahrens an Hand der Zeichnungen.

Es zeigt:
Fig. 1 eine nach einem bekannten Verfahren hergestellte Schweißnaht, die Enden von Hohlprofilleisten (oder die Enden einer zu einem Rahmen gebogenen Hohlprofilleiste) verbindet,
Fig. 2 zum Ausführen des erfindungsgemäßen Verfahrens vorbereitete Enden einer Hohlprofilleiste in Schrägansicht,
Fig. 3 in einem Längsschnitt die Enden von für das Ausführen des erfindungsgemäßen Verfahrens vorbereiteten Hohlprofilleisten,
Fig. 4 in einem Längsschnitt die Hohlprofilleisten nach dem Verbinden durch Schweißen und
Fig. 5 eine abgeänderte Ausführungsform für das Erzeugen einer zurückversetzten Kante.

Wenn die Enden von zwei Hohlprofilleisten 1 oder die Enden einer Hohlprofilleiste 1, die zu einem rahmenförmigen Abstandhalter für Isolierglas verformt worden ist, nach dem bekannten Verfahren durch Schweißen miteinander verbunden werden, entsteht im Bereich der Schweißstelle an der Hohlprofilleiste 1 eine störende, von außen sichtbare Schweißnaht 4. Diese Schweißnaht 4 ist insbesondere bei rahmenförmigen Abstandhaltern für Isolierglas aus Hohlprofilleisten 1 störend, da sie auf der Fläche 2 der Hohlprofilleisten 1 zu sehen ist, welche die Innenseite eines Abstandhalterrahmens bildet (diese Fläche ist üblicherweise mit Öffnungen 3 für das Wirksamwerden eines in die Hohlprofilleiste eingefüllten hygroskopischen Werkstoffs versehen), da diese Fläche 2 im fertigen Isolierglas sichtbar ist.

Beim erfindungsgemäßen Verfahren werden die miteinander zu verbinddenden Enden einer Hohlprofilleiste 1 - wenn die Enden einer zu einem rahmenartigen Abstandhalter gebogenen Hohlprofilleiste 1 miteinander zu verbinden sind - oder die Enden von zwei Hohlprofilleisten 1 - die miteinander zu einer längeren Hohlprofilleiste durch Schweißen zu verbinden sind - vor dem Ausführen des Schweißvorganges mit je einer gegenüber den Stirnflächen 5 zurückversetzten Kante 7 versehen. Diese Kanten 7 werden in der Fläche 2, die im Abstandhalterrahmen die Innenfläche bildet, erzeugt. Die Kanten 7 erstrecken sich über die gesamte Breite der Fläche 2 der Hohlprofilleiste 1. Damit Schweißraupen auch im Bereich der Seitenflächen der Hohlprofilleiste(n) 1 vermieden werden, werden gegenüber den Stirnflächen 5 zurückversetzte Kanten 7 auch in den Seitenflächen der Hohlprofilleiste(n) 1 vorgesehen (nicht gezeigt). Diese Kanten 7 erstrecken sich über die gesamte Höhe der Seitenflächen.

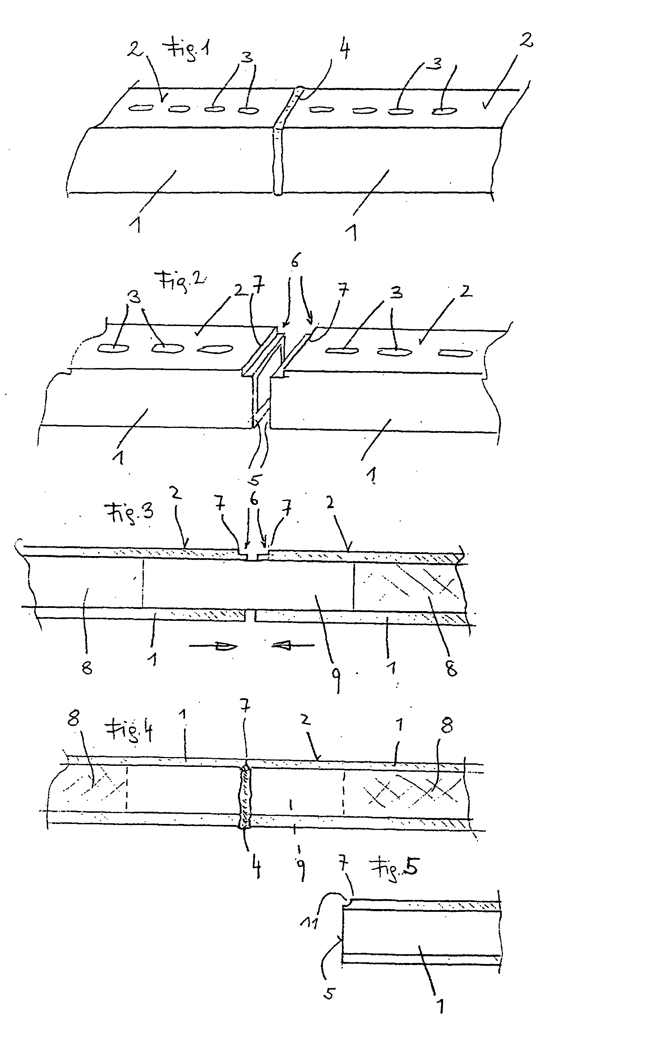

In dem in Fig. 2 gezeigten Ausführungsbeispiel werden die zurückversetzten Kanten 7 dadurch erzeugt, daß in der Wand der Hohlprofilleiste 1, welche die Innenfläche 2 bildet, Stufen 6, erzeugt werden. Diese Stufen 6 können durch plastisches Verformen oder bevorzugt durch Abtragen von Material (Fräsen od.dgl.) erzeugt werden. Wesentlich ist in jedem Fall, daß vor dem Schweißvorgang wenigstens im Bereich der Flächen 2, welche die Innenseite des Abstandhalterrahmens bilden werden oder bereits bilden, und im Bereich der Seitenflächen gegenüber den miteinander zu verbindenden Stirnflächen 5 zurückversetzte Kanten 7 vorliegen.

Fig. 3 zeigt im Längsschnitt die Situation von Fig. 2 vor dem Ausführen des Schweißvorganges zum Verbinden der Enden von Hohlprofilleisten 1 oder einer Hohlprofilleiste 1.

In Fig. 3 ist auch gezeigt, daß in die Enden der Hohlprofilleiste(n) 1 ein Pfropfen 9, beispielsweise aus Kunststoff, eingesetzt ist, der verhindert, daß in die Hohlprofilleiste 1 eingefülltes, hygroskopisches Material 8 (Trockenmittel) austritt. Dies ist wichtig, wenn die Enden einer zu einem Abstandhalterrahmen verformten, bereits mit Trockenmittel gefüllten Hohlprofilleiste 1 miteinander zum Schließen des Abstandhalterrahmens durch Schweißen verbunden werden sollen.

Beim Ausführen des Schweißvorganges werden die Enden der Hohlprofilleiste 1 in Richtung der Pfeile in Fig. 3 gegeneinander gepreßt und beim Schweißvorgang so weit aufeinander zu bewegt, daß die ursprünglich gegenüber den Stirnflächen 5 zurückversetzten Kanten 7 am Ende des Schweißvorganges aneinander anliegen. Dabei ist im Bereich der Kanten 7, also im Bereich der Fläche 2 der Hohlprofilleisten 1, keine von außen sichtbare Schweißraupe vorhanden (vgl. Fig. 4).

Bei der Erfindung wird also die Bewegung der miteinander zu verschweißenden Enden der Hohlprofilleiste 1 oder der Hohlprofilleiste(n) 1 aufeinander zu und das Schweißen abgebrochen, sobald sich die Kanten 7 berühren.

Fig. 4 zeigt im Längsschnitt das Ergebnis eines erfindungsgemäßen Schweißverfahrens zum Verbinden der Enden von zwei Hohlprofilleisten 1 (oder einer Hohlprofilleiste 1 bei einem Abstandhalterrahmen). Es ist zu sehen, daß die Kanten 7 aneinander anliegen und dort von außen keine Schweißraupe sichtbar ist.

Im Prinzip ist es für das erfindungsgemäße Verfahren gleichgültig, auf welche Weise die über den Stirnflächen 5 der miteinander zu verbindenden Hohlprofilleisten 1 zurückversetzten Kanten 7 ausgebildet werden. Neben den in den Fig. 2 und 3 gezeigten Stufen 6 kann die die Fläche 2 bildende Wand der Hohlprofilleiste 1 auch mit einer Hohlkehle 11 (Fig. 5) versehen werden.

Für ein sicheres Verbinden von Hohlprofilleisten 1 oder einer zu einem Abstandhalterrahmen gebogenen Hohlprofilleiste 1 nach dem erfindungsgemäßen Verfahren ist es vorteilhaft, wenn die Stirnfläche 5 der Hohlprofilleiste(n) 1 auch im Bereich der zurückversetzten Kanten 7 zwar schmäler ausgebildet ist, aber doch bestehen bleibt, so daß auch im Bereich der Wand, welche die Fläche 2 bildet, ein sicheres Verbinden der Hohlprofilleiste(n) 1 erreicht wird.

## Patentansprüche

1. Verfahren zum Verbinden der Enden von Hohlprofilleisten (1) oder der Enden einer zu einem Rahmen gebogenen Hohlprofilleiste (1) miteinander durch Stumpfschweißen, bei dem vor dem Ausführen des Schweißvorganges an wenigstens einer Fläche (2) der miteinander zu verbindenden Enden gegenüber den Stirnflächen (5) der Enden zurückversetzte und sich über die Breite der Fläche (2) erstreckende Kanten (7) erzeugt werden, und bei dem die Stirnflächen (5) der Enden aneinandergelegt und die Enden während des Schweißvorganges so weit aufeinanderzu bewegt werden, bis die Kanten (7) einander berühren, **dadurch gekennzeichnet, daß** die zurückversetzten Kanten (7) beim Verbinden der Enden der Hohlprofilleiste(n) (1) aus Metall, insbesondere Aluminium, die als Abstandhalter für Isolierglas bestimmt sind, oder beim Verbinden der Enden einer zu einem rahmenartigen Abstandhalter für Isolierglas verformten Hohlprofilleiste (1) aus Metall, insbesondere Aluminium, an der im Isolierglas innen liegenden Fläche (2) und an beiden Seitenflächen der Hohlprofilleiste(n) (1) erzeugt werden, und daß der Schweißvorgang beendet wird, sobald die Kanten (7) einander berühren.

2. Verfahren nach Anspruch 1, **dadurch gekennzeichnet, daß** die zurückversetzten Kanten (7) durch Ausbilden von Stufen (6) erzeugt werden.

3. Verfahren nach Anspruch 1, **dadurch gekennzeichnet, daß** die zurückversetzten Kanten (7) durch Ausbilden von Hohlkehlen (11) erzeugt werden.

4. Verfahren nach einem der Ansprüche 1 bis 3, **dadurch gekennzeichnet, daß** die zurückversetzten Kanten (7) durch spanabhebendes Bearbeiten von Wänden der Hohlprofilleiste(n) (1) erzeugt werden.

5. Verfahren nach einem der Ansprüche 1 bis 4, **dadurch gekennzeichnet, daß** sich die zurückversetzten Kanten (7) über die gesamte Höhe der Seitenflächen der Hohlprofilleiste(n) (1) erstrecken.

## Claims

1. Process for joining the ends of hollow section strips (1) or the ends of a hollow section strip (1) which has been bent into a frame to one another by butt welding, in which before execution of the welding process on at least one surface (2) of the ends to be joined to one another edges (7) are formed which extend over the width of the surface (2) and which are moved back relativè to the face surfaces (5) of the ends, and in which the face surfaces (5) of the ends are placed against one another and the ends during the welding process arc moved towards one another until the edges (7) touch one another, **characterized in that** the edges (7) which have been moved back when joining the ends of the hollow section strip(s) (1) of metal, especially aluminum, which are intended as spacers for insulating glass, or when joining the ends of a hollow section strip (1) of metal, especially aluminum, which has been formed into a frame-like spacer for insulating glass, are produced on the surface (2) which lies to the inside in the insulating glass, and on both side surfaces of the hollow section strip(s)(1), and that the welding process is ended as soon as the edges (7) touch one another.

2. Process as claimed in claim 1, wherein the edges (7) which have been moved back are produced by forming steps (6).

3. Process as claimed in claim 1, wherein the edges (7) which have been moved back arc produced by forming grooves (11).

4. Process as claimed in one of claims 1 to 3, wherein the edges (7) which have been moved back are produced by cutting metal from the walls of the hollow section strip(s)(1):

5. Process as claimed in one of claims 1 to 4, wherein the edges (7) which have been moved back extend over the entire height of the side surfaces of the hollow section strip(s)(1).

## Revendications

1. Procédé pour relier l'une à l'autre, par soudage bout à bout, les extrémités de barres de profilé creux (1) ou les extrémités d'une barre de profilé creux (1) pliée pour former un cadre, sclon lequel avant exécution de l'opération de soudage, sur au moins une surface (2) des extrémités à assembler, on façonne des bords (7) qui sont en retrait par rapport aux faces frontales (5) des extrémités et s'étendent sur toute la largeur de la surface (2), et selon lequel on applique l'une contre l'autre les faces frontales (5) des extrémités et on déplace les extrémités en direction l'une de l'autre pendant l'opération de soudage jusqu'à ce que les bords (7) se touchent, **caractérisé en ce que** les bords (7) en retrait, lors de l'assemblage des extrémités de la (des) barre(s) de profilé creux (1) en métal, plus particulièrement en aluminium, destinées à former des intercalaires pour vitrages isolants, ou lors de l'assemblage des extrémités d'une barre de profilé creux (1) en métal, plus particulièrement en aluminium, façonnée en cadre intercalaire pour vitrage isolant, sont réalisés sur la surface (2) située côté intérieur dans le vitrage isolant et sur les deux faces latérales de la (des) barre(s) de profilé creux (1) et **en ce que** l'opération de soudage est arrêtée dès que les bords (7) se touchent.

2. Procédé selon la revendication 1, **caractérisé en ce que** les bords (7) en retrait sont réalisés par façonnage de gradins (6).

3. Procédé selon la revendication 1, **caractérisé en ce que** les bords (7) en retrait sont réalisés par façonnage de congés (11).

4. Procédé selon une des revendications 1 à 3, **caractérisé en ce que** les bords (7) en retrait sont réalisés par usinage par enlèvement de copeaux de parois de la (des) barre(s) de profilé creux (1).

5. Procédé selon une des revendications 1 à 4, **caractérisé en ce que** les bords (7) en retrait s'étendent sur la totalité de la hauteur des faces latérales de la (des) barre(s) de profilé creux (1).
